# NEW EUROPEAN PATENT SPECIFICATION

(11) **EP 1 020 107 B2**
(45) Date of publication and mention of the opposition decision: **26.04.2006**
(45) Mention of the grant of the patent: 09.10.2002
(21) Application number: 98935043.4
(22) Date of filing: 31.07.1998
(51) Int. Cl.: A01D 46/26

(54) **PORTABLE AGRICULTURAL MACHINE WITH ATTENUATION OF THE VIBRATIONS AND PROTECTION FOR THE CARRIER**
TRAGBARE LANDWIRTSCHAFTLICHE MASCHINE MIT SCHWINGUNGSDÄMPFUNG UND SCHUTZ FÜR DEN BEDIENER
MACHINE AGRICOLE PORTATIVE AVEC UN SYSTEME D'ATTENUATION DES VIBRATIONS ET DE PROTECTION POUR L'OPERATEUR

(30) Priority: 05.08.1997 ES 9702143 U; 25.05.1998 ES 9801351 U; 09.07.1998 ES 9801831 U; 09.07.1998 ES 9801832 U; 10.07.1998 ES 9801853 U; 10.07.1998 ES 9801854 U
(43) Date of publication of application: 19.07.2000
(73) Proprietor: Hispaes, S.L., 08182 San Feliu de Codines (ES)
(72) Inventor: GURRI MOLINS, Josep, E-08182 Sant Feliu de Codines (ES)
(74) Representative: Gislon, Gabriele
(86) International application number: PCT/ES1998/000224
(87) International publication number: WO 1999/007203

(56) References cited:
- EP-A- 0 207 034
- EP-A- 0 294 842
- ES-U- 1 000 253
- ES-U- 1 032 630
- FR-A- 2 305 927
- FR-A- 2 393 697
- SU-A- 1 770 118
- US-A- 3 459 269
- US-A- 3 772 784
- US-A- 4 655 032
- US-A- 4 696 108
- US-A- 5 157 807

## Description

### Field of the art

This invention relates to a portable agricultural machine, of the type which permanently sustains strong oscillations and vibrations during Its operation according to the preamble of claim 1. The invention is applied, namely, to self-propelled portable vibrating machines, designed to harvest fruits such as olives or almonds which they pick up from the trees by means of vibration motion or intermittent shakes applied to a tree branch or secondary trunk, which is tightly secured by means of a hook, fork, jaw, clamp or the like ended by a long pole or rod associated by a distal end to a vibrating mechanism driven by said engine, provoking this way the fruits fall. The invention is also applicable to other machines, mainly agricultural machines, provided with a tool associated to a rod, for example pruning by means of a saw for medium sized branches located very high, scissors for green pruning and for small high branches or machines equipped with a tool fastened on the frame itself, such as scissors to prune small and low branches, saw mowers, punching machines, etc. whose operation is on the ground of the use of a moderately high frequency alternate motion.

### Background of the invention

An example of said portable vibrating, mechanically beating down agricultural machines to have the tree fruits or berries fall is disclosed in Patents FR-A-2,305,927 and US-A-3,924,390, as well as in the Utility Model ES-A-1000253, in which a constitution which became classic and generalized in this kind of machine is disclosed.

In fact, the machine disclosed in last above model comprises a frame bearing the vibration generating mechanism, to which frame is joined a motor for driving said mechanism, which has attached a vibrating rod ending in a grasping organ, and it has been provided, surrounding a guided elementtransmitting the vibration and at a first portion of said rod, immediately close to said frame, a protecting reed thereafter called hand-guard, as well as a grip handle linked to the frame and a whole machine supporting harness capable to be carried by an operator. Typically, the operator supports the machine weight on his shoulders through said harness, while with one hand he grasps a handle which may include the organs controlling the machine driving, and with the other hand he grasps the hand-guard sleeve, commanding and orientating the machine with both hands. US-A-3 459 269 discloses a portable agricultural machine comprising junction elements disposed between the handle and the machine. These elements are pivot links connecting the handle to the machine body.

A first problem which occurs with this kind of machines is that the vibrations inherent to its operation are transmitted to the operator through the handles or grips necessary to fasten and to command it. Because of the fact that the agricultural product harvest campaigns which are determined by the seasonality and the atmospheric conditions use to be very intensive, the operators are required to have long working days, whose harness is increased by the constant vibrations they have to sustain from the machine. Forthis reason, there exists the need to insulate, as much as possible, the operator from the vibrations generated by this kind of machines.

On the other hand, the fact that the operator grasps the machine by the sleeve with one hand to assist to the command and orientation thereof, means a risk of accidents to the hands because there exists a clearance between the sleeve open mouthpiece and said rod, with a vibration alternate linearmotion between both parts.

There also exists therefore the need to provide this kind of machines with best ergonomic and safe conditions which release the tension, the fatigue and the risk of accidents meant by long working days sustaining continuous vibrations.

Therefore, an object of this invention is to offer a machine of this kind provided with one or several handles fixed to the machine body with means capable to significantly insulate the operatorfrom the vibrations the machine sustains, allowing him at same time a good command and orientation thereof through said handles.

Another additional object of this invention is to offer a machine of this type provided with a protecting element for the hands at the sleeve mouthpiece which does not interfere with the relative free vibrating motion between the sleeve and the rod.

### Summary of the invention

These objects are achieved in a portable agricultural machine according to the characterising portion of Claim 1. With this, the main vibrations inherent to the machine operation, which are produced in lengthwise direction thereof, are absorbed to a certain extent by said junction elements so that they arrive significantly attenuated to the operator. However, the substantial crosswise stiffness of said junction elements allows the operator to keep the machine control and to command the orientation thereof. In addition, it is foreseen that at least one of said handles with attenuated vibration has available the machine driving control organs, such as accelerator, accelerator lock and stop button.

On the other hand, to complete the ergonomic and safety measures in said vibrating machine a protecting element is provided for the hands at the sleeve mouthpiece area. Because in this area the rod shows vibrating linear and rotation motion with respect to sleeve, the protecting element has a shape which allows said motions while covering the clearance between the handshield open mouthpiece and the rod.

### Brief description of the drawings

These and other characteristics will become more apparent from the following detailed description of some examples of embodiment which are shown with a mere illustration not limitating purpose with relation to the drawings attached, In which:

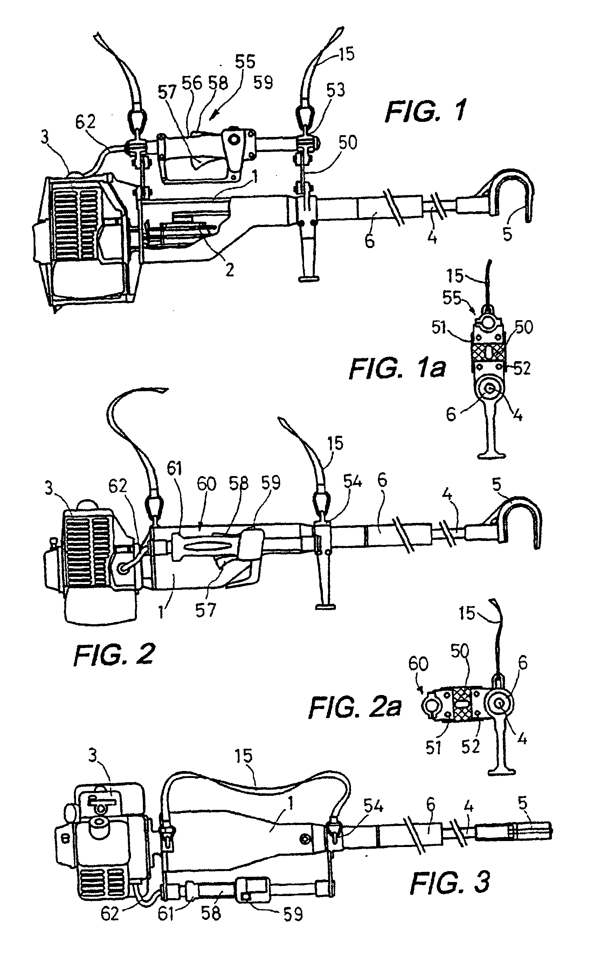

Fig. 1 is a side elevation view which illustrates a machine according to this invention, with a handle provided with attenuation of the vibrations located in a higher position of the machine body;
Fig. 1 a is a very simplified front view which illustrates the arrangement of the machine vibration attenuating elements of Fig. 1;
Fig. 2 is a side elevation view which illustrates a machine according to this invention, with a handle provided with vibration attenuation located in a side position of the machine body;
Fig. 2a is a very simplified front view which illustrates the arrangement of the machine vibration attenuating elements of Fig. 2;
Fig. 3 is a plan view of the machine of Fig. 2;
Figs. 4 and 5 are, respectively, side and plan views of a machine not according to the invention with handles having attenuated vibration by bending;
Figs. 6 and 7 are, respectively, front and side views, in enlarged details, of a handle having attenuated vibration by bending the machine of Figs. 4 and 5;
Figs. 8 and 9 are, respectively, side and plan views of a machine not according to the invention with handles having attenuated vibration by twisting;
Fig. 10 is a front view, partly sectioned and in enlarged details, of a handle having attenuated vibration by twisting the machine of Figs. 8 and 9;
Fig. 11 is a view in lengthwise section of a bellowlike protecting element, which is shown in maximum and minimum extension positions within the cycle of vibrating linear motion, respectively, in the higher and lower halves of the figure.
Fig. 12 is a view in lengthwise section of a sleevelike protecting element, which is shown in maximum and minimum extension positions within the cycle of vibrating linear motion, respectively, in higher and lower halves of the figure; and
Fig. 13 is a lengthwise section of the sleevelike protecting element of Fig. 12 which illustrates the position of the hand-guard sleeve in the rod mounting or dismounting operation.

### Detailed description of the invention

Figs. 1 to 10 show, in general, a portable agricultural machine with vibration attenuations for the carrier, which comprises a frame 1 which supports a vibration generating mechanism 2 and which has attached a driving engine 3 for said mechanism to which a vibrating rod 4 is connected which is ending in a grasping organ 5. Surrounding a first portion of said rod 4, immediately close to said frame 1 there is a hand-guard sleeve 6. Said machine includes at leat one grip handle linked to the machine body, by means of junction elements and a harness 15 to support the whole machine, capable to be carried by an operator only shown In Figs. 2 to 3.

The main characteristic of said junction elements between the handle and the machine body is that they are flexible in rod 4 vibrating motion main direction and substantially rigid crosswise thereof. With this it is achieved that said junction elements absorb to a substantial extent the machine lengthwise vibrations insulating the operator therefrom, while by virtue of its cross stiffness, the operator may command through said handles the machine rotating orientation.

Figs. 1 to 3 show two examples of embodiment of the handle provided with vibration attenuation which only differs in the handle position with respect to the machine body. This difference becomes important if it is borne In mind that in the example of embodiment of Figs. 1 and 1a an operator supports the machine by means of an harness 15 through the handle, while in the example of embodiment of Figs. 2, 2a and 3, the harness is independent of the handle therefore the harness locking elements 54 remain closer, above the machine centre of gravity which facilitates its rotation about the rod and sleeve lengthwise axis.

Both examples of embodiment have in common that said junction elements between the handle and the machine body are formed by sheets 50 made of flexible material resistant to traction such as strip steel, reinforced rubber, leather or the like, arranged so that their flat faces are crosswise to the vibrating motion main direction.

Each handle is linked to the machine body by means at least of two of said sheets 50, and each of said sheets 50 comprises at least two points 51 fastening to the handle and two points 52 fastening to the machine body, so that said sheets 50 rotation is prevented about the fastening points, which added to said sheets 50 crosswise stiffness allow to command the machine rotation with respect to the sleeve 6 axis when operating said handle.

Said fastening points 51, 52 (see Figs. 1 a and 2a) are achieved by means of screws with backing plate, said points 52 fastening the sheets 50 to the machine body and therefore the handle being located between the vibrating rod A engine 3 and sleeve 6.

With relation to the example of embodiment of Figs. 1 and 1a a handle 55 can be seen located at the higher part of the frame 1, spaced apart from it, in a position substantially parallel to the machine vibrating motion main direction, integrating at its higher part some anchorages 53 for said harness 15, so that the machine remain suspended from the harness 15, through said handle 55 and sheets 50, so that the assembly remain suspended, balanced, in a substantial horizontal position.

On its hand, the example of embodiment of Figs.2, 2a and 3 comprises a handle 60 located on a frame 1 side, spaced apart from it, in a position substantially parallel to the machine vibrating motion main direction, while the harness 15 is fastened to the higher part of the frame 1 by means of anchorages 54 arranged in a not too high position with respect to the machine centre of gravity, so that the assembly remain suspended, balanced, in a substantially horizontal position.

As well handle 55 as handle 60 have available a respective housing 56, 61 of their own, independent, in which are found the machine control devices, which comprise, for example, the accelerator 57, the accelerator lock and safety catch 58 and the stop pushbutton 59, said control devices being connected to the machine by means of cables of electrical and/or mechanical transmission arranged within a flexible hose 62.

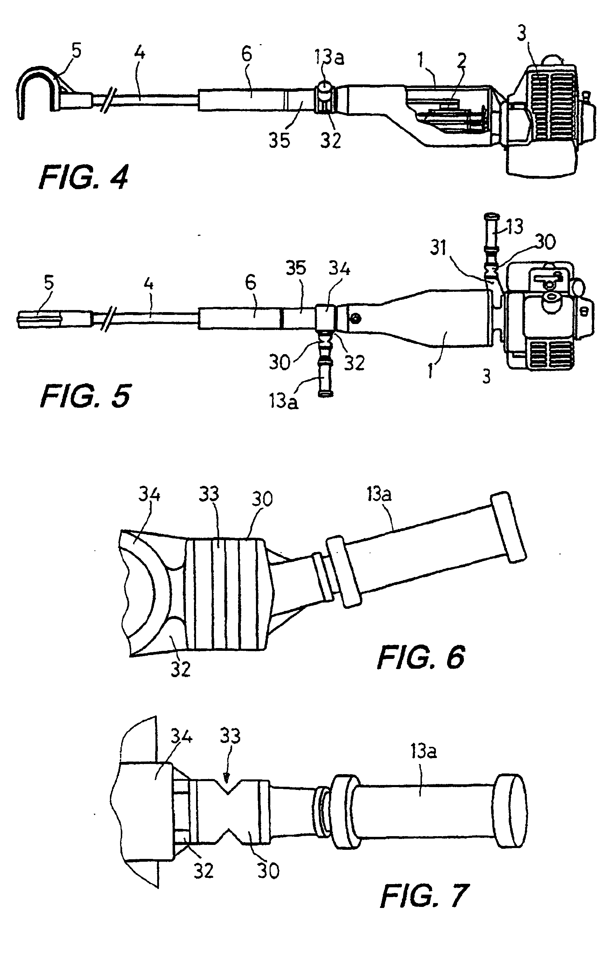

In Figs. 4 to 7, an embodiment not according to the invention is shown in which said junction elements between the handle and the machine body are formed by a block 30 of resilient and flexible material such as rubber, capable to absorb by bending at least a great part of the vibrations and shakes produced on rod 4 lengthwise movement axis. Said block 30 is interposed between an appendage 31, 32 linked to the machine body and said handle 13,13a and is tightly joined by the respective faces of contact with said appendages 31, 32 and the machine body by means of an adhesive or by mechanical fastening elements.

Said block 30 shows in its medium area a significant narrowing defined by two recesses 33, directly opposite, with their mouthpieces oriented in the machine lengthwise direction. In the plane defined by this narrowing block30 there is a section of smaller area that makes it be less stiff, so that It shows a higher flexibility in this direction to absorb a great part of the machine lengthwise vibrating movements while it is substantially rigid in crosswise direction.

Although in the figures said block 30 has been illustrated with a cross section basically rectangular, it is obvious that it would be also effective if the block 30 were prismatic with polygonal base or even cylindrical, provided that said narrowing is duly oriented.

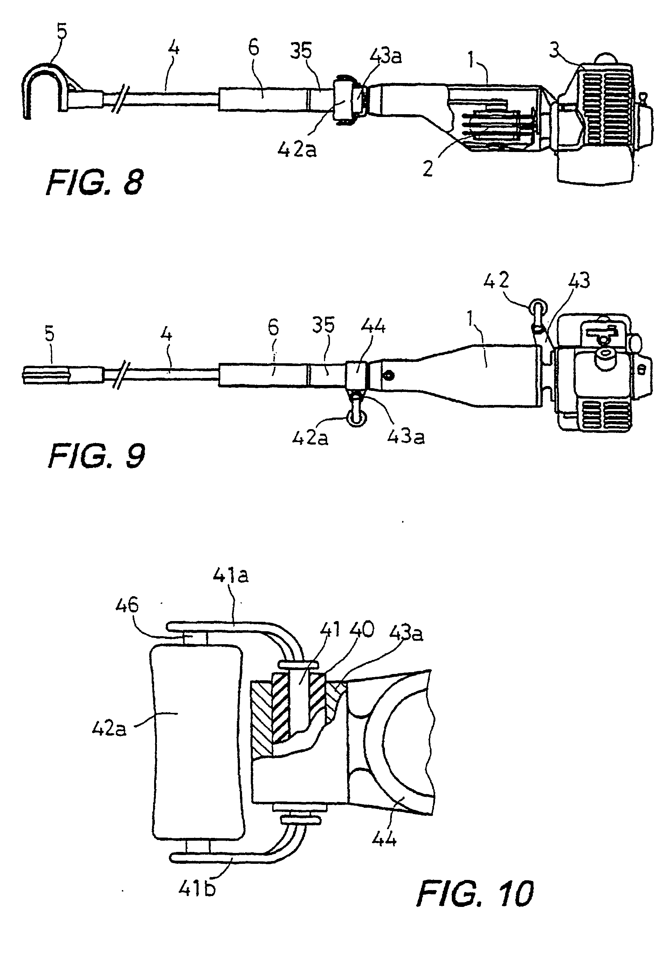

On their hands Figs. 8, 9 and 10 show an embodiment not according to the invention in which said junction elements between handles and machine body are formed by a body 40 of resilient and flexible material, such as rubber, capable to absorb by twisting at least a great part of the vibrations and shakes produced on said rod 4 lengthwise movement axis. Said body 40 possesses a hole through which a core 41 is arranged which is extended in two arms 41a, 41b joined through a handle 42, 42a, said body 40 being inserted and tightly retained by its external part, in a through housing of an appendage 43, 43a linked to the machine body and the body 40 being tightly joined to said intemal core 41.

It is essential that said body 40 is located so that said core 41 or body 40 symmetry axis remains in a position perpendicularto the axis of rod 4 reciprocating vibrating motion main direction. This provides a great rotation flexibility in the absorbtion direction of said lengthwise motions while it appears substantially stiff in the crosswise direction.

The handle 42, 42a is formed by a tubular body arranged coaxially to an axis 46 which join the two branches 41 a, 41 b of the core 41, with possibility of rotation about said axis 46. Said tubular body is, preferably, of a resilient flexible material and with a suitable shape to be grasped with the hand.

As well the external configuration of this block 40 as the hole and related core 41 will with respect to block 40 advantageously be prismatic with polygonal section, because this way the internal or external slidingly rotation of said core 41 will be effectively prevented, allowing only a limited core 41 rotation by twisting the block and therefore the handle 42, 42a reciprocating motion by said block elastic twist.

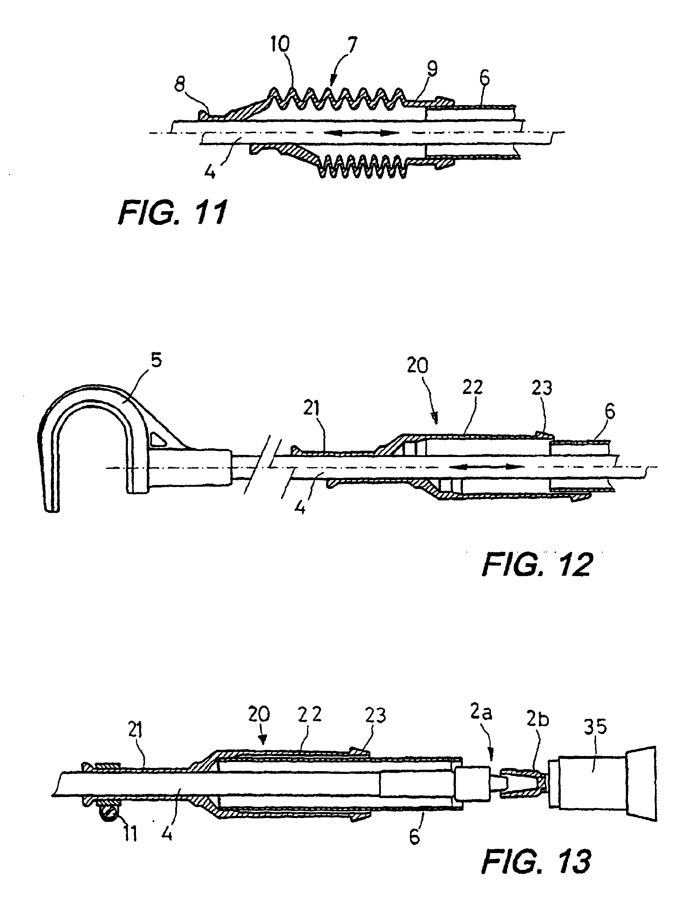

In the examples of embodiment not according to the invention illustrated in Figs. 4 to 10, the portable vibrating machine has available two handles 13, 13a and 42, 42a associated to respective appendages 31, 32 and 43, 43a. One of said handles 13, 42 is advantageously located close to the area linking the engine 3 to the machine frame 1, while the other 13a, 42a, is located on a guiding section 35 of a vibration transmitting element2b linked to the end coupling the rod 4 distal from the hook 5, by means of a junction element 2a. Said elements 2a and 2b appear detailed in Fig. 13.

The appendage 32, 43a, to which is joined the block 30, or the body 40 and the handle 13a, 42a located in front of the machine frame 1, is connected to a clamp 34 which surrounds said guiding section 35, said section 35 being extended with sleeve 6.

It is obvious that as much in the example of embodiment of Figs. 4 to 7 as in the one of Figs. 8 to 10, at least one of the handles 13, 13a and 42, 42a can also include the machine driving control elements as in the examples of embodiment illustrated in Figs. 1 to 3.

As for the sleeve 6 mouthpiece protecting element, Fig. 11 shows a sleevelike tubular member 7 of flexible and resilient material which possesses two end portions having differentiated section 8, 9 respectively adapted to diameters corresponding to rod 4 and sleeve 6, whose portions 8 and 9 are linked by a bellowlike corrugated tubular section 10, which allows to absorb the rod 4 alternate linear vibrating motions. Said portion 8 is coaxially fixed to the rod 4 by pressurized adjusted insertion by the effect of the tubular member 7 material elasticity while said portion 9 is fixed on the sleeve 6 free mouthpiece.

In the higher and lower halves of the figure a tubular member 7 is shown in maximum and minimum extension positions, respectively, within the cycle of rod 4 vibrating linear motion with respect to sleeve 6.

Said bellowlike section 10 has a number of folds so that it allows sleeve 6 linear displacement (not shown) said sleeve being previously taken apart from section 35, whose length allows the mounting or dismounting operation of a junction member 2a between rod 4 and a vibration transmitting element 2b linked to mechanism 2 generating it. In addition, member 7 portion 9 fixed on hand-guard sleeve 6 free mouthpiece is capable to be released to facilitate said rod 4 unlocking.

On its hand, Fig. 12 shows another example of embodiment of a protecting element formed by a sleevelike tubular member 20 with a larger section 22 portion which is fit on sleeve 6 mouthpiece, with the capability of a reciprocating linear and/or rotation displacement and with a smaller section 21 portion coaxially fixed on rod 4. Said portion of smaller section 21 is dimensioned to facilitate its hand grasping in order to allow rod 4 rotation about its own axis. It has to be pointed out that the larger section 22 portion is not joined to the sleeve but is moving very close, on the external surface of the end thereof. This facilitates rod 4 free rotation about its own axis together with tubular member 20, independent from sleeve 6 and the rest of the machine.

In higher and lower halves of Fig. 12, a tubular member 20 is shown at the positions of maximum and minimum extension, respectively, within the cycle of rod 4 vibrating linear motion with respect to sleeve 6.

Said tubular member 20 is made of a flexible and resilient material so that the union to said rod 4 is made in a preferred embodiment by means of a pressurized socketing of the smaller section 21 portion on a rod 4 section.

On its hand, the larger section 22 portion allows to house within it, thanks to its glasslike wrapping shape, part of hand-guard sleeve 6, previously taken apart from section 35 or a transmitting axis guide, so that it facilitates mounting or dismounting operation of junction member 2a between rod 4 and vibration transmitting element 2b linked to mechanism 2 generating it. The open end of said larger section 22 portion fit on the sleeve 6 end shows at the mouthpiece an edge 23 with a round edge wedge profile which has the tendency to expel the operator's hand in the event of impact with it, preventing accidents.

In both examples of embodiment, the use of a fastening flange 11 has been provided coaxially arranged on tubular member 7, 20 portion 8, 21 adapted on the rod (4) (see Fig. 13).

## Claims

1. Portable agricultural machine with attenuation of the vibrations and protection for the carrier, of the type comprising:
- a frame (1) carrying a vibration generating mechanism (2), and which has joined an engine (3) for driving said mechanism, to which is connected a vibrating rod (4) ending in a grasping organ (5), and it has been provided, surrounding a first portion of said rod, immediately close to said frame, a hand-guard sleeve (6);
- at least a grip handle (55; 60) linked to the machine body by means of junction elements; and
- a harness (15) for supporting the machine assembly, capable to be carried by an operator,
**characterized in that** said junction elements are formed by sheets (50) of flexible material resistant to traction, arranged so that their planar faces remain crosswise to the main direction of the vibrating motion of the rod (4), said sheets (50) being flexible in said rod (4) vibrating motion main direction and substantially rigid crosswise to it.

2. Portable agricultural machine, according to claim 1, **characterized in that** each handle is linked to the machine body by means of at least two of said sheets (50).

3. Portable agricultural machine, according to claim 2, **characterized in that** each of said sheets (50) comprises at least two points (51) fastening to the handle and two points (52) fastening to the machine body, so that said sheets (50) rotation about the fastening points is prevented which in addition to said sheets (50) crosswise stiffness allows to command the machine rotation with respect to sleeve (6) axis when operating the handle.

4. Portable agricultural machine, according to claim 3, **characterized in that** said fastening points (51, 52) are achieved by means of screws with back plate, the points (52) fastening the sheets (50) to the machine body being located between the angina (3) and vibrating rod (4) sleeve (6).

5. Portable agricultural machine, according to claim 3, **characterized in that** handle (55) is located, spaced apart from frame (1), at the higher part thereof, in a position substantially parallel to the machine vibrating motion main direction, including at its higher part anchorages (53) for said harness (15) so that the machine remains suspended from the harness (15) through said handle (55) and sheets (50) so that the assembly remains suspended balanced in a substantially horizontal position.

6. Portable agricultural machine, according to claim 3, **characterized in that** handle (60) is located spaced apart from frame (1) on one side thereof, in a position substantially parallel to the machine vibrating motion main direction, while the harness (15) is fastened to the higher part of the frame (1) by means of anchorages (54) arranged in a not too high position with respect to the machine centre of gravity, so that the assembly remains suspended balanced in a substantially horizontal position.

7. Portable agricultural machine, according to claim 5 or 6, **characterized in that** said handle (55, 60) has an independent housing (56, 61) of its own, in which are located the machine control devices which are selected from a group including the accelerator (57), the accelerator lock and safety catch (58), and the stop pushbutton (59), said control devices being connected to the machine by means of cables of electrical and/or mechanical transmission arranged within a flexible hose (62).

8. Portable agricultural machine, according to any of the preceding claims, **characterized in that** it includes a protecting element (7, 20) at sleeve (6) open mouthpiece to prevent accidents at the hands caused by relative vibrating motion between rod (4) and sleeve (6).

9. Portable agricultural machine, according to claim 8, **characterized in that** said protecting element is formed by a sleeve like tubular member (7) of flexible and resilient material which possesses two end portions having differentiated section (8, 9) respectively adapted to diameters corresponding to rod (4) and sleeve (6), whose portions (8 and 9) are linked to each other by a bellowlike corrugated tubular section (10), which allows to absorb rod (4) alternate linear vibrating motions, said portion (8) being coaxially fixed to rod (4) by pressurized adjusted insertion by the effect of tubular member (7) material elasticity while said portion (9) is fixed on sleeve (6) free mouthpiece.

10. Portable agricultural machine, according to claim 9, **characterized in that** said bellowlike section (10) has a number of folds so that it allows sleeve (6) linear displacement, said sleeve being previously taken apart from section (35), whose length allows mounting or dismounting operation of a junction member (2a) between rod (4) and a vibration transmitting element (2b) linked to mechanism (2) generating it, and **in that** member (7) portion (9) fixed on hand-guard sleeve (6) free mouthpiece is capable to be released to facilitate said rod (4) unlocking.

11. Portable agricultural machine, according to claim 8, **characterized in that** said protecting element is formed by a sleevelike tubular member (20) with a larger section (22) portion which is fit on sleeve (6) mouthpiece, with the capability of a reciprocating linear and/or rotation displacement and with a smaller section (21) portion coaxially fixed on rod (4), said portion of smaller section (21) is dimensioned to facilitate its hand grasping in order to allow rod (4) rotation about its own axis.

12. Portable agricultural machine, according to claim 11, **characterized in that** said tubular member (20) is made of a flexible and resilient material so that the union of said rod (4) is made by pressurized socketing of the smaller section (21) portion on rod (4) section and **in that** the larger section (22) portion allows to house within it, thanks to its bowl-shaped wrapping, part of hand-guard sleeve (6), previously taken apart from section (35) or a transmitting axis guide, so that it facilitates mounting or dismounting operation of junction member (2a) between rod (4) and a vibration transmitting element (2b) linked to mechanism (2) generating it, said larger section (22) portion fit on sleeve (6) end shows at the mouthpiece an edge (2)3 with a round edge wedge profile.

13. Portable agricultural machine, according to claim 9 or 11, **characterized in that** a fastening clamp (11) has been provided, arranged coaxial on tubular member (7,20) portion (8, 21) adapted on the rod (4).

## Patentansprüche

1. Tragbare Landwirtschaftsmaschine mit Schwingungsdämpfung und Schutz für den Träger, mit:
- einem Rahmen (1), der ein schwingungserzeugendes Getriebe (2) trägt und mit dem ein Motor (3) zum Antrieb des Getriebes verbunden ist, mit dem eine Schwingstange (4) verbunden ist, die in einem Greifelement (5) endet, wobei ein einen ersten Abschnitt der Stange in unmittelbarer Nähe des Rahmens umgebendes Handschutzrohr (6);
- mindestens ein mit dem Maschinenkörper durch Verbindungselemente verbundener Handgriff (55, 60);
- ein Gurt (15) zur Stütze des Maschinenaufbaus vorgesehen sind, so daß dieser von einem Bediener getragen werden kann,
**dadurch gekennzeichnet, dass** die Verbindungselemente aus Platten (50) aus einem zugfesten, biegsamen Material bestehen, und so angeordnet sind, dass ihre ebenen Flächen quer zur Hauptrichtung der Schwinguhgsbewegung der Stange (4) verbfeiben, wobei die Platten (50) in der Hauptrichtung der Schwinguhgsbewegung der Stange (4) biegsam und quer dazu starr sind.

2. Tragbare Landwirtschaftsmaschine nach Anspruch 1, **dadurch gekennzeichnet, dass** die Handgriffe mit dem Maschinenkörper jeweils über mindestens zwei der Platten (50) verbunden sind.

3. Tragbare Landwirtschaftsmaschine nach Anspruch 2, **dadurch gekennzeichnet, dass** die Platten (50) jeweils mindestens zwei am Handgriff befestigte Punkte (51) und zwei am Maschinenkörper befestigte Punkte (52) aufweisen, wodurch eine Drehung der Platten (50) um die Befestigungspunkte verhindert wird und zusätzlich zu der Quersteife der Platten (50) bei Betätigung des Handgriffs die Maschinendrehung bezüglich der Rohrachse (6) gesteuert werden kann.

4. Tragbare Landwirtschaftsmaschine nach Anspruch 3, **dadurch gekennzeichnet, dass** die Befestigungspunkte (51, 52) mittels Schrauben mit Rückenplatte bewerkstelligt werden, wobei die Punkte (52), die die Platten (50) am Maschinenkörper befestigen, zwischen dem Motor (3) und dem Rohr (6) der Schwingungstange (4) angeordnet sind.

5. Tragbare Landwirtschaftsmaschine nach Anspruch 3, **dadurch gekennzeichnet, dass** der Handgriff (55) vom Rahmen (1) beabstandet an dessen oberen Teil angeordnet ist, und zwar in einer Stellung, die im wesentlichen parallel zu der Hauptrichtung der Maschinenschwingungsbewegung verläuft, und an seinem oberen Teil Verankerungen (53) für den Gurt (15) aufweist, so dass die Maschine über den Handgriff (55) und die Platten (50) am Gurt (15) hängt, so dass der Aufbau in einer im wesentlichen horizontalen Lage im Gleichgewicht hängt.

6. Tragbare Landwirtschaftsmaschine nach Anspruch 3, **dadurch gekennzeichnet, dass** der Handgriff (60) vom Rahmen (1) beabstandet an dessen einer Seite angeordnet ist, und zwar in einer Stellung, die im wesentlichen parallel zu der Hauptrichtung der Maschinenschwingungsbewegung verläuft, während der Gurt (15) am höheren Teil des Rahmens (1) mittels Verankerungen (54) befestigt ist, die bezüglich des Maschinenschwerpunkts in einer nicht zu hohen Lage angeordnet sind, so dass der Aufbau in einer im wesentlichen horizontalen Lage im Gleichgewicht hängt.

7. Tragbare Landwirtschaftsmaschine nach Anspruch 5 oder 6, **dadurch gekennzeichnet, dass** der Handgriff (55, 60) sein eigenes unabhängiges Gehäuse (56, 61) aufweist, in dem die Maschinensteuerungseinrichtungen untergebracht sind, die aus einer Gruppe ausgewählt werden, die den Gashebel (57), die Gashebelverriegelung und Sicherheitssperre (58) sowie die Stopptaste (59) umfasst, wobei die Steuerungseinrichtungen mit der Maschine über elektrische und /oder mechanische, in einem Gummischtauch (62) angeordnete Getriebekabel verbunden sind.

8. Tragbare Landwirtschaftsmaschine nach Anspruch 1, **dadurch gekennzeichnet, dass** sie am offenen Ende des Rohrs (6) ein Schutzelement (7, 20) aufweist, um Handverletzungen zu verhindern, die durch die relative Schwingungsbewegung zwischen der Stange (4) und dem Rohr (6) verursacht werden.

9. Tragbare Landwirtschaftsmaschine nach Anspruch 8, **dadurch gekennzeichnet, dass** das Schutzelement aus einem schlauchförmigen Rohrelement (7) aus biegsamen und widerstandsfähigem Material bseteht, das zwei Endabschnitte mit unterschiedlichem Querschnitt (8, 9) aufweist, die jeweils an den der Stange (4) bzw. dem Rohr (6) entsprechenden Durchmesser angepasst sind, deren Abschnitte (8 und 9) durch einen balgförmigen, welligen Rohrabschnitt (10) miteinander verbunden sind, wodurch die abwechselnden linearen Schwingugsbewegungen gedämpft werden können, wobei der Abschnitt (8) an der Stange (4) durch unter Druck angepasstes Einfügen als Folge der Stoffelastizität des Rohrelements (7) koaxial befestigt ist, während der Abschnitt (9) am offenen Ende des Rohrs (6) befestigt ist.

10. Tragbare Landwirtschaftsmaschine nach Anspruch 9, **dadurch gekennzeichnet, dass** der balgförmige Abschnitt (10) mehrere Falten aufweist, so dass das Rohr (6) linear verschiebbar ist, wobei das Rohr zuvor vom Abschnitt (35) abgenommen wurde, dessen Länge einen Einbau bzw. Ausbau eines Verbindungselements (2a) zwischen der Stange (4) und einem schwingungsübertragenden Element (2b) gestattet, das mit einem dieses erzeugenden Getriebe (2) verbunden ist, und dass der Abschnitt (9) des am offenen Ende des Handschutzrohrs (6) befestigten Elements (7) lösbar ist, um das Entriegeln der Stange (4) zu erleichtern.

11. Tragbare Landwirtschaftsmaschine nach Anspruch 8, **dadurch gekennzeichnet, dass** das Schutzelement aus einem schlauchförmigen Rohrelement (20) besteht mit einem Abschnitt (22) mit größerem Querschnitt; das auf die Öffnung des Rohrs (6) passt und zu einer hin- und hergehenden linearen und/oder Drehbewegung befähigt ist, und mit einem Abschnitt (21) mit kleinerem Querschnitt, der koaxial an der Stange (4) befestigt ist, wobei der Abschnitt mit dem kleineren. Querschnitt (21) so bemessen ist, dass er leichter mit der Hand gegriffen werden kann, wodurch die Stange (4) um die eigene Achse drehbar ist.

12. Tragbare Landwirtschaftsmaschine nach Anspruch 11, **dadurch gekennzeichnet, dass** das Rohrelement (20) aus einem biegsamen und widerstandsfähigen Material besteht, so dass die Verbindung der Stange (4) durch Aufstecken unter Druck des Abschnitts (21) mit dem kleineren Querschnitt auf den Stangenabschnitt (4) erfolgt und dass im Abschnitt (22) mit dem größeren Querschnitt infolge dessen schalenförmiger Verkleidung ein Teil des Handschutzrohrs (6), das zuvor vom Abschnitt (35) oder einen Antriebsachsenführung abgenommen wurde, gelagert werden kann, wodurch der Einbau bzw. Ausbau des Verbindungselements (2a) zwischen der Stange (4) und einem schwingungsübertragenden Element (2b), das mit einem dieses erzeugenden Getriebe (2) verbunden ist, erleichtert wird, wobei der auf die Rohröffnung (6) aufgesteckte Abschnitt (22) mit dem größeren Querschnitt an der Öffnung eine Kante (23) mit einem rundeckigen Keilprofil aufweist.

13. Tragbare Landwirtschaftsmaschine nach Anspruch 9 oder 11, **dadurch gekennzeichnet, dass** eine Befestigungsklammer (11) vorgesehen ist, die koaxial auf einem der Stange (4) angepassten Abschnitt (8, 21) eines Rohrelements (7, 20) angeordnet ist.

## Revendications

1. Machine agricole portative avec atténuation des vibrations et une protection du manipulateur, du type comprenant:
- un bâti (1) portant un mécanisme de génération des vibrations (2), auquel est accouplé un moteur (3) pour l'entraînement de ce mécanisme, auquel est connectée une tige vibratoire (4) se terminant par un organe de saisie (5), tige qui dispose d'un manchon de protection de la main (6) entourant la première partie de cette tige, placée immédiatement à côté du bâti en question;
- une poignée de saisie (55 ;60) au moins, reliée au châssis de la machine au moyen d'éléments de jonction;
- un harnais (15) pour supporter l'ensemble de la machine, adapté pour être porté par un opérateur
**caractérisée par le fait que** ces éléments de jonction se composent de lames ou bandes (50) en matériau flexible résistant à la traction, disposées de telle sorte que leurs faces planes sont perpendiculaires à la direction principale du mouvement vibratoire de la tige (4), lesdites lames (50) étant flexibles dans ladite direction principale du mouvement vibratoire de la tige (4) et essentiellement rigides, perpendiculairement à cette direction.

2. Machine agricole portative conformément à la revendication 1 **caractérisée par le fait que** chaque poignée est reliée au corps de la machine par au moins deux desdites bandes (50).

3. Machine agricole portative conformément à la revendication 2. **caractérisée par le fait que** chacune de ces bandes (50) comporte au moins deux points (51) d'attache à la poignée et deux points (52) d'attache au corps de la machine, de telle sorte que toute rotation de ces bandes (50) autour des points d'attache est évitée ce qui, compte tenu de la rigidité perpendiculaire de ces bandes (50) permet de contrôler la rotation de la machine par rapport à l'axe du manchon (6) lorsqu'on agit sur la poignée.

4. Machine agricole portative conformément à la revendication 3 **caractérisée par le fait que** les points d'attache (51, 52) sont constitués par des vis à plaque d'appui, les points d'attache (52) des bandes (50) au corps de la machine se trouvant entre le moteur (3) et le manchon (6) de la tige vibratoire.

5. Machine agricole portative conformément à la revendication 3 **caractérisée par le fait que** la poignée (55) est placée à la partie supérieure du bâti (1) et séparée de celui-ci, dans une position essentiellement parallèle à la direction principale du mouvement vibratoire de la machine et comprend à sa partie supérieure les ancrages (53) du harnais (15), de telle sorte que la machine est suspendue par le harnais (15) grâce à la poignée (55), et les bandes (50), de telle sorte que l'ensemble est suspendu dans une position essentiellement horizontale.

6. Machine agricole portative conformément à la revendication 3 **caractérisée par le fait que** la poignée (60) est placée sur l'un des côtés du bâti (1) et séparée de celui-ci, dans une position essentiellement parallèle à la direction principale du mouvement vibratoire de la machine, alors que le harnais (15) est attaché à la partie supérieure du bâti (1) au moyen des ancrages (54) disposés dans une position pas trop élevée par rapport au centre de gravité de la machine, de telle sorte que l'ensemble est suspendu de manière équilibrée dans une position essentiellement horizontale.

7. Machine agricole portative conformément à la revendication 5 ou 6 **caractérisée par le fait que** la poignée (55, 60) comporte son propre logement indépendant (56, 61) dans lequel sont logés les dispositifs de contrôle de la machine, qui comprennent par exemple l'accélérateur (57), le verrou de l'accélérateur et son cran de sécurité (58) ainsi que le poussoir de stop (59), ces dispositifs de contrôle étant connectés à la machine par des câbles de transmission électrique et/ou mécanique placés dans une gaine flexible (62).

8. Machine agricole portative conformément à l'une quelconque des' revendications précédentes, **caractérisée par le fait qu'**elle comporte un élément de protection (7, 20) à la partie ouverte de l'embouchure du manchon (6), de manière à éviter tout accident de la main occasionné par le mouvement vibratoire relatif entre la tige (4) et le manchon (6).

9. Machine agricole portative conformément à la revendication 8, **caractérisée par le fait que** l'élément de protection comporte un élément tubulaire en forme de manchon (7) constitué par un matériau souple et résilient, qui présente deux parties d'extrémité de sections différentes (8, 9) adaptées respectivement aux diamètres de la tige (4) et du manchon (6), ces parties (8-9) étant unies l'une à l'autre par une section tubulaire ondulée en forme de soufflet (10) qui permet d'absorber les mouvement vibratoires linéaires alternatifs de la tige (4), la partie (8) étant fixée de manière coaxiale à la tige (4) par insertion à pression ajustée grâce à l'effet d'élasticité du matériau de l'élément tubulaire (7), alors que la partie (9) est fixée sur l'ouverture libre du manchon (6).

10. Machine agricole portative conformément à la revendication 9, **caractérisée par le fait que** la section en forme de soufflet (10) présente un certain nombre de plis qui permettent le déplacement linéaire du manchon (6) celui-ci étant séparé au préalable de la section (35), dont la longueur permet le montage ou le démontage d'un élément de jonction (2a) entre la tige (4) et l'élément de transmission des vibrations (2b) relié au mécanisme (2) qui les génère et **par le fait que** dans l'élément (7), la partie (9) fixée sur le manchon qui protège la main (6) peut être détachée pour faciliter le déblocage de la tige (4).

11. Machine agricole portative conformément à la revendication 8, **caractérisée par le fait que** ledit élément de protection comporte un élément tubulaire en forme de manchon (20), comprenant une partie à plus grande section (22) montée sur l'embouchure du manchon (6), pouvant reproduire un déplacement linéaire et/ou rotatif et comportant également une partie à section plus petite (21) fixée de manière coaxiale sur la tige (4), cette partie à plus petite section (21) ayant des dimensions destinées à faciliter sa prise en main afin de faciliter la rotation de la tige (4) autour de son propre axe.

12. Machine agricole portative conformément à la revendication 11, **caractérisée par le fait que** l'élément tubulaire (20) se compose d'un matériau souple et résilient de telle sorte que l'union de la tige (4) s'obtient par emboîtement sous pression de la partie à section plus petite (21) sur la section de la tige (4) et que la partie à plus grande section (22) permet d'y loger, grâce à son enveloppe en forme de bol, une partie du manchon de protection de la main (6) ôté préalablement de la section (35) ou un guide axial de transmission, ce qui facilite le montage ou le démontage de l'élément de jonction (2a) entre la tige (4) et l'élément de transmission des vibrations (2b) relié au mécanisme (2) qui les génère, cette partie à plus grande section (22) montée sur l'extrémité du manchon (6) présentant à l'embouchure un bord (23) ayant un profil de coin à bord arrondi.

13. Machine agricole portative conformément à la revendication 9 ou 11, **caractérisée par** le fait par qu'une bague de fixation (11) a été prévue et placée de manière coaxiale sur la partie (8,21) de l'élément tubulaire (7, 20) adapté sur la tige (4).
